(19) Europäisches Patentamt / European Patent Office / Office européen des brevets

(11) **EP 1 837 675 A1**

(12) **EUROPEAN PATENT APPLICATION**
published in accordance with Art. 158(3) EPC

(43) Date of publication:
**26.09.2007 Bulletin 2007/39**

(51) Int Cl.:
***G01S 5/14*** *(2006.01)*

(21) Application number: **05814600.2**

(22) Date of filing: **07.12.2005**

(86) International application number:
**PCT/JP2005/022458**

(87) International publication number:
**WO 2006/067968 (29.06.2006 Gazette 2006/26)**

(84) Designated Contracting States:
**DE FR GB**

(30) Priority: **20.12.2004 JP 2004367662**

(71) Applicant: **MATSUSHITA ELECTRIC INDUSTRIAL CO., LTD.**
**Osaka 571-8501 (JP)**

(72) Inventor: **HATAMOTO, Satoshi**
**c/o Matsushita Electric Industrial Co., Ltd.**
**Chuo-ku**
**Osaka-shi**
**Osaka 540-6207 (JP)**

(74) Representative: **Pautex Schneider, Nicole Véronique et al**
**Novagraaf International SA**
**25, Avenue du Pailly**
**1220 Les Avanchets - Geneva (CH)**

(54) **ADVANCE DIRECTION MEASUREMENT DEVICE**

(57)     An advance direction measurement apparatus **11**, installed on a movable body, is connected with two antennas **12, 13** receiving signals from satellites. The advance direction measurement apparatus **11** comprises an antenna azimuth measurement unit **21** for measuring, based on a signal received by each of the antennas **12, 13**, an antenna arrangement azimuth indicative of a direction in which one of the positions of the two antennas **12, 13** is viewed from the other; a velocity calculation unit **22** for calculating a velocity vector of the movable body based on the signals received by each of the antennas **12, 13**; a correction value calculation unit **23** for calculating, as a correction value, an angle formed between the antenna arrangement azimuth and the direction of the velocity vector when the magnitude of the calculated velocity vector is equal to or greater than a predetermined value; and an advance direction calculation unit **24** for calculating the advance direction of the movable body by using both the calculated correction value and the antenna arrangement azimuth. Accordingly, the advance direction measurement apparatus **11** can measure the precise advance direction of a movable body such as a vehicle without restriction on installing the antennas.

FIG. 2

**Description**

**TECHNICAL FIELD OF THE INVENTION**

The present invention relates to an advance direction measurement apparatus for measuring an advance direction of a movable body.

**DESCRIPTION OF THE RELATED ART**

Up until now, as apparatuses for measuring an advance direction used in vehicular navigation systems, there has been generally used a conventional advance direction measurement apparatus equipped with a geomagnetic sensor or a gyroscope.
In the case with such a geomagnetic sensor, the conventional advance direction measurement apparatus is capable of measuring an absolute direction in which a vehicle advanses. The conventional advance direction measurement apparatus equipped with a geomagnetic sensor, however, has a drawback that the precise direction of the vehicle cannot be detected because such a geomagnetic sensor is commonly affected by magnetostriction of the vehicle itself with a number of metallic parts or a fluctuation in a magnetic field caused by a railway crossing or an electrical power line. In the case with such a gyroscope, the conventional advance direction measurement apparatus also has another drawback that the absolute direction of the vehicle cannot be measured but only the relative direction can be measured. Where the relative direction means a current direction of movement of the vehicle with respect to a previous direction thereof at a reference point
As an alternative example of conventional advance direction measurement apparatuses, using GPS (Global Positioning System), there has been well known an apparatus which observes a frequency shift caused by the Doppler effect of a carrier wave received by a GPS antenna from a satellite, then measuring an absolute direction of movement of a vehicle on the basis of the orbit information of the known satellite and the position information of the vehicle. This alternative example of conventional advance direction measurement apparatuses has a drawback that the advance direction cannot be measured when the vehicle is cruising at a low speed or not cruising.
As another conventional advance direction measurement apparatus to overcome the foregoing drawbacks, there has been well known an apparatus to be equipped with two GPS antennas and a main antenna each installed on a vehicle, the GPS antennas having an antenna arrangement azimuth indicative of a direction in which one of the two GPS antennas is viewed from the other, the antenna arrangement azimuth being parallel to the forward direction of the vehicle. The conventional advance direction measurement apparatus of this type obtains a difference between distances of the respective GPS antennas to a satellite based on a time delay between carrier waves received by the respective GPS antennas from the satellite, then measuring the absolute direction based on the difference between propagation distances, then obtaining the directional orientation of the main antenna based on the measured absolute direction (see, for example, Japanese Unexamined Patent Application Publication No. H7-131228).

**DISCLOSURE OF THE INVENTION**

**PROBLEMS TO BE SOLVED**

The conventional advance direction measurement apparatus described above, however, encounters such a problem that the advance direction may have a measurement error depending on the magnitude of the GPS antenna shift from the desired installed position, resulting from the fact that it is difficult to exactly align the two GPS antennas in the direction parallel to the forward direction of the vehicle or the two GPS antennas may shift from the position intially installed without being fixed while the vehicle is cruising.
The present invention has been made to solve the conventional problem described above, and has an object to provide an advance direction measurement apparatus which can measure a precise advance direction of a movable body, such as a vehicle, without restriction on installing antennas.

**MEANS OF SOLVING THE PROBLEMS**

To achieve the previously mentioned object, in accordance with an aspect of the present invention, there is provided an advance direction measurement apparatus installed on a movable body and connected with two antennas receiving signals from satellites. The advance direction measurement apparatus comprises an antenna azimuth measurement unit for measuring, on the basis of the signals received by each of the two antennas, an antenna arrangement azimuth indicative of a direction in which one of the positions of the two antennas is viewed from the other, a velocity calculation unit for calculating a velocity vector of the movable body on the basis of the signals received by each of the two antennas, a correction value calculation unit for calculating, as a correction value, an angle formed between the antenna arrangement azimuth and the direction of the velocity vector when a magnitude of the velocity vector calculated by the velocity calculation unit is greater than or equal to a predetermined value, and an advance direction calculation unit for calculating an advance direction of the movable body by using both the antenna arrangement azimuth and the correction value calculated by the correction value calculation unit.

Further, in the advance direction measurement apparatus according to the present invention, if the magnitude of the velocity vector calculated by the velocity calculation unit is greater than or equal to the predetermined value, the advance direction calculation unit may regard the direction of the velocity vector as the advance direction of the movable body. On the other hand, if the magnitude of the velocity vector calculated by the velocity calculation unit is less than the predetermined value, the advance direction calculation unit may calculate the advance direction of the movable body from the antenna arrangement azimuth measured by the antenna azimuth measurement unit and the correction value calculated by the correction value calculation unit

Further, in the advance direction measurement apparatus according to the present invention, if the magnitude of the velocity vector calculated by the velocity calculation unit is greater than or equal to the predetermined value, the correction value calculation unit may calculate the correction value again and modify the correction value previously calculated on the basis of the correction value newly calculated, if the correction value calculation unit has the correction value previously calculated.

Further, in the advance direction measurement apparatus according to the present invention, a combination of satellites transmitting signals received by one of the two antennas may be the same as a combination of satellites transmitting signals received by the other of the two antennas.

## EFFECT OF THE INVENTION

From the foregoing description, the present invention provides an advance direction measurement apparatus which can measure a precise advance direction of a movable body, a vehicle and the like, without restriction on installing antennas.

## BRIEF DESCRIPTION OF THE DRAWINGS

[FIG. 1] FIG. 1 is an overhead view of a vehicle equipped with an advance direction measurement apparatus 11 according to an embodiment of the present invention.
[FIG. 2] FIG. 2 is a block diagram of an advance direction measurement apparatus 11 according to an embodiment of the present invention.
[FIG. 3] FIG. 3 is a view explaining how to calculate a velocity vector of each satellite.
[FIG. 4] FIG. 4 is a view explaining how to calculate a velocity vector of a vehicle.

## EXPLANATION OF THE REFERENCE NUMERALS

| | |
|---|---|
| 1,2,3,4 | satellite |
| 10 | observer (vehicle) |
| 11 | advance direction measurement apparatus |
| 12,13 | antenna |
| 14 | advance direction |
| 15 | arrangement azimuth |
| 21 | antenna azimuth measurement unit |
| 22 | velocity calculation unit |
| 23 | correction value calculation unit |
| 24 | advance direction calculation unit |
| 25 | notification unit |

## DESCRIPTION OF THE PREFERRED EMBODIMENTS

The following description will be directed to a preferred embodiment of an advance direction measurement apparatus 11 according to the present invention with reference to the drawings.

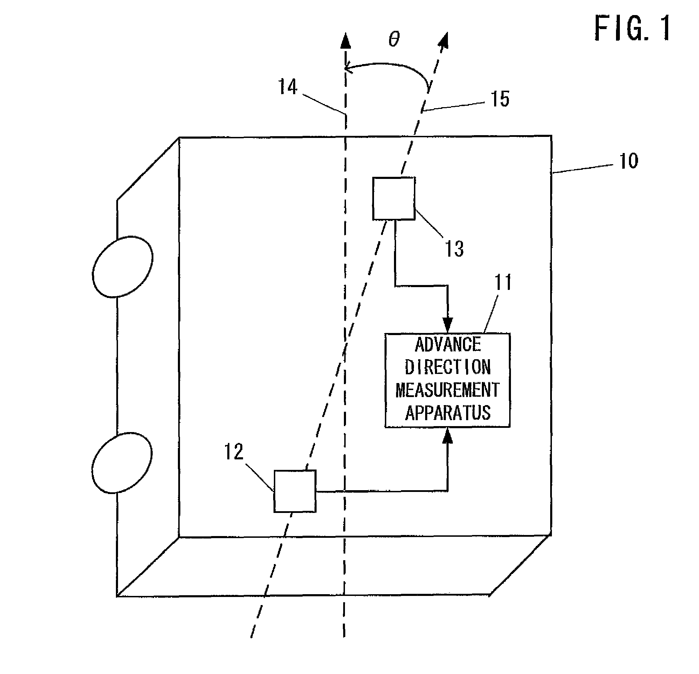

FIG. **1** is an overhead view of a vehicle equipped with the advance direction measurement apparatus **11**. As shown in FIG. **1,** a vehicle **11** has GPS antennas **12** and **13** installed thereon. It is preferred to install the antennas 12 and 13 on positions to be able to receive signals from satellites, for example, on a dashboard or a hood. These antennas **12** and **13** receive carrier signals from GPS satellites (hereinafter referred to as the "satellites").

In FIG. **1,** an arrow **14** indicates the advance direction of the vehicle **10** to be measured by the advance direction measurement apparatus **11** and an arrow **15** indicates an antenna arrangement azimuth (hereinafter referred to as the "arrangement azimuth") indicative of a direction in which the antenna **13** is viewed from the antenna **12**. An angle θ, formed between the advance direction **14** and the arrangement azimuth **15,** is used as a correction value for measuring the advance direction **14** of the vehicle **10**.

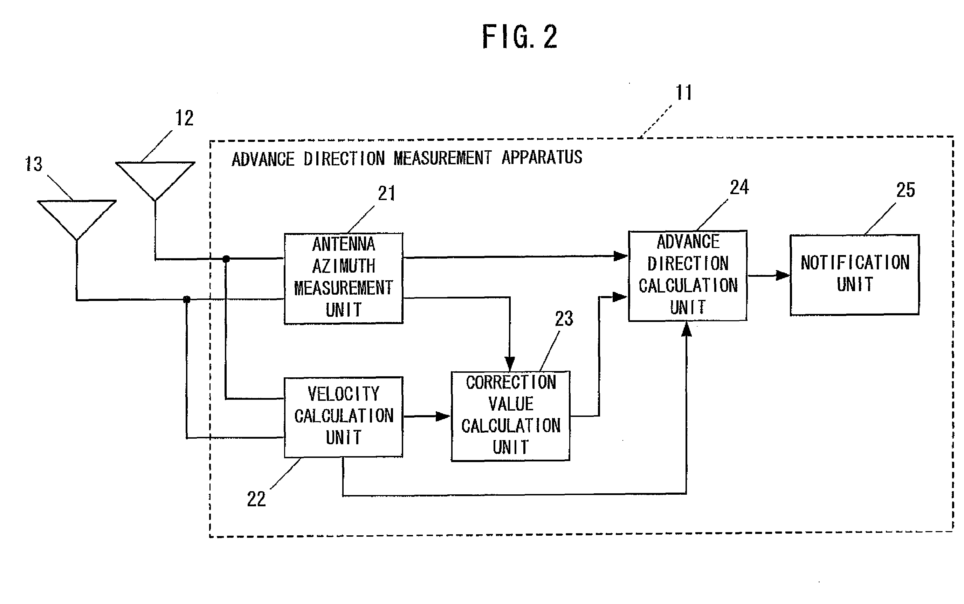

FIG. **2** is a block diagram of the advance direction measurement apparatus **11** according to the preferred embodiment of the present invention. In FIG. **2,** the advance direction measurement apparatus **11** is connected to the antennas **12** and **13,** and comprises an antenna azimuth measurement unit **21** for measuring the arrangement azimuth 15 using signals received by the antennas **12** and **13,** an velocity calculation unit **22** for calculating the velocity vector of the vehicle **10** from signals received by the antennas **12** and **13,** a correction value calculation unit **23** for calculating the angle θ as the correction value from the arrangement azimuth **15** and the velocity vector, an advance direction calculation unit 24 for calculating the advance direction **14** from the velocity vector, the correction value and the arrangement azimuth **15,** and a notification unit **25** including a display and/or a speaker for notifying a user of the advance direction **14.**

The advance direction measurement apparatus **11** is constituted by, for example, a computer including a processor and a memory. Alternatively, the antenna azimuth measurement unit **21,** the velocity calculation unit **22,** the correction value calculation unit **23,** and the advance direction calculation unit **24** may be implemented as program modules to be executed by the processor, or may be constituted by a electrical circuit, and the like.

The operation of the advance direction measurement apparatus **11** thus constructed in the above description will be described hereinafter.

The antenna azimuth measurement unit **21** measures the positions of the antennas **12** and **13** based on signals received by the antennas 12 and 13 from the satellites, then measures the arrangement azimuth **15** indicative of a direction of the measured position of the antenna **12** to the measured position of the antenna **13**. The arrangement azimuth **15** is measured as an absolute direction. The position measured by the antenna azimuth measurement unit **21** has a measurement error because of the effect of multipath occurring between the satellites and the antennas, the effect of the ionosphere existing between the satellites and the antennas, and/or another effect of a clock error, and the like, may decrease the measurement accuracy.

In general, a GPS-measured position is measured using signals from a plurality of satellites. If one of the combinations of satellites transmitting signals received by the antennas is different from the other, the relative positional relationship of the antennas **12** and **13** may have a measurement error. On the other hand, if one of the combinations of satellites transmitting signals received by the antennas is the same as the other, no measurement error may occuer in the relative positional relationship thereof, thus the absolute direction being measured precisely.

In this embodiment of the advance direction measurement apparatus, in order to achieve high accuracy in measuring relative positional relationship between the antennas **12** and **13,** the antenna azimuth measurement unit **21** measures the arrangement azimuth **15** under the condition that the combination of satellites transmitting signals received by antenna **12** is the same as the combination of satellites transmitting signals received by antenna **13.**

The velocity calculation unit **22** calculates the velocity vector of the vehicle **10** based on signals received by the antennas **12** and **13**. The carrier waves received by the anntennas **12** and **13** have frequency shifts due to the Doppler effects. The frequency shifts occuers regardless of whether the anntennas **12** and **13** are moved or not, because the satellites are orbiting around the earth.. Using the frequency shifts caused by the Doppler effects, the velocity calculation unit **22** can calculate the velocity vector.

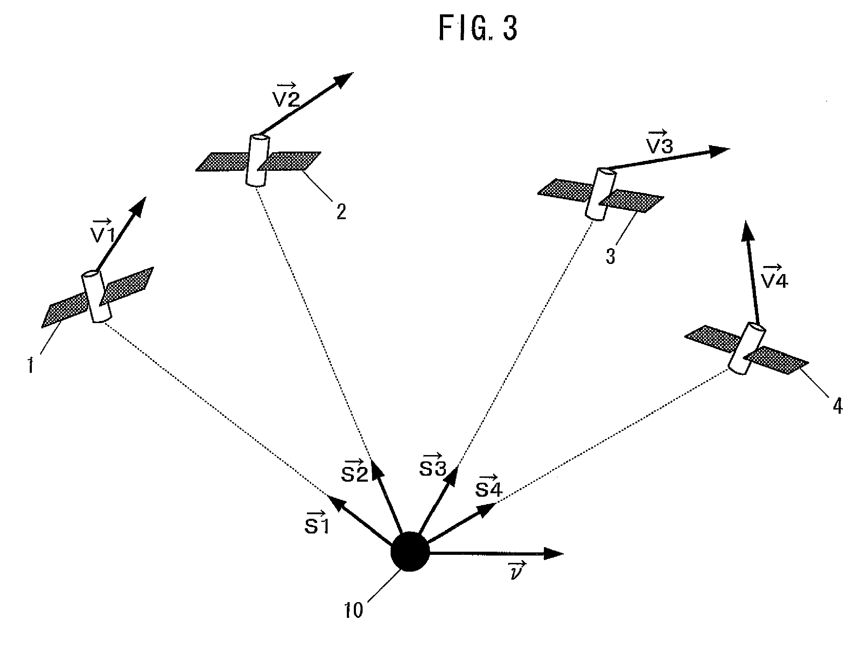

FIG. **3** is a view explaining how to calculate the velocity vector of each satellite. As shown in FIG. **3,** the reference characters **V1** to **V4** respectively represent velocity vectors of the satellites **1** to **4** and the reference characters **S1** to **S4** respectively represent unit vectors connecting the position of the observer (i.e., the vehicle) **10** and the positions of the satellites **1** to **4**. the reference character ν represents the velocity vector of the observer **10.**

The velocity vectors **V1** to **V4** can be obtained from the known information about the orbits of the satellites **1** to **4**. The unit vectors **S1** to **S4** can be obtained by measuring the position of the observer **10.**

Now, targeting one of the satellites **1** to **4,** represented as the satellite i (i=1,2,3,4), the relative velocity between the observer **10** and the satellite **i** can be expressed as (**Vi-** ν). The inner product between the relative velocity (**Vi-** ν) and the unit vector Si, represented as ρi, can be expressed by the following equation (1):

$$(\vec{V}_i - \vec{v}) \cdot \vec{S}_i = \rho_i \quad \cdot \quad \cdot \quad \cdot \quad (1)$$

The frequency of the carrier wave received from the satellite **i** is known and represented as the frequency **f.** The frequency shift due to the Doppler effect in the carrier wave received from the satellite i, represented as $\Delta fi$, the frequency error in the receiver, represented as $\delta f$, and the light velocity, represented as c, fulfill the relationship expressed by the following equation (2):

$$\Delta f_i + \delta f = f \frac{\rho_i}{c} \quad \cdot \quad \cdot \quad \cdot \quad (2)$$

Then the following equation **(3)** is derived from the equations **(1)** and **(2)**:

$$\frac{\Delta f_i + \delta f}{f} = \frac{(\vec{V}_i - \vec{v})}{c} \cdot \vec{S}_i \quad \cdot \quad \cdot \quad \cdot (3)$$

The equation **(3)** has four unknowns, three components of the velocity vector v and the frequency error 6 f in the receiver. Therefore, four equations can be derived from the equation **(3)** by assigning each value of the frequency shifts $\Delta$**f1** to $\Delta$**f4** to the equation (3), by observing $\Delta$**f1** to $\Delta$**f4** related to four satellites. The frequency error $\delta$**f** and the velocity vector v can be calculated by solving the four equations.

From the foregoing description, it will be understood that the velocity calculation unit **22** can calculate the velocity vector of the vehicle **10,** by observing the frequency shifts due to the Doppler effects based on signals received by the antennas **12** and 13 **and** by calculating each velocity vector v for the antennas **12** and **13.**

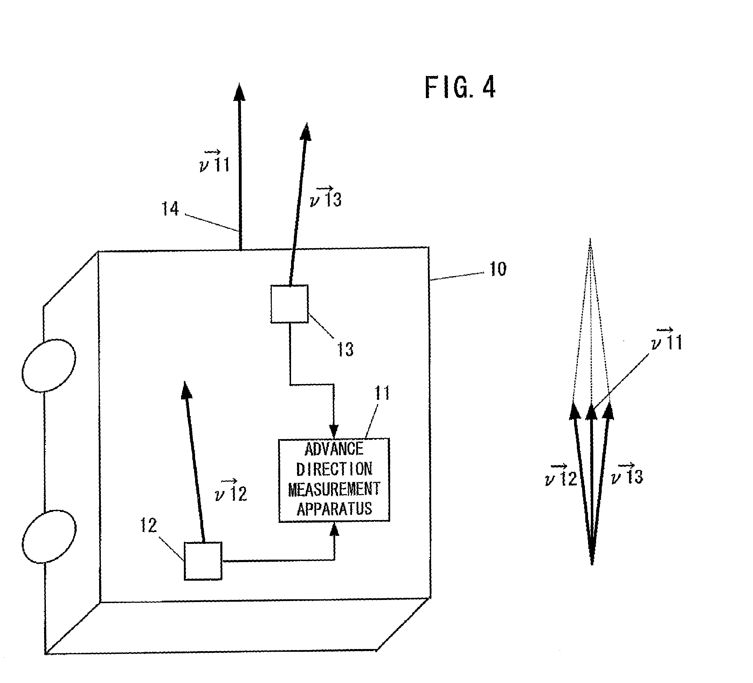

For more detailed example, as shown in FIG. **4,** the velocity calculation unit **22** calculates the average of the velocity vector v**12** for the antenna **12** and the velocity vector v**13** for the antenna **13** as the velocity vector v**11** of the vehicle **10.** The following equation **(4)** is used to calculate the average:

$$\vec{v}_{11} = \frac{\vec{v}_{12} + \vec{v}_{13}}{2} \cdot \quad \cdot \quad \cdot \quad (4)$$

While the vehicle **10** is not cruising, the velocity calculation unit **22** cannot calculate the velocity vector v**11** of the vehicle **10,** because only the movement of the satellites results in the frequency shifts due to the Doppler effects. While the vehicle **10** is cruising at a low speed, the error in the velocity vector v**11** calculated by the velocity calculation unit **22** may increase, because the small movement of the vehicle **10** results in the small frequency shifts.

On the other hand, while the vehicle **10** is cruising at a high speed relative to the satellites, the velocity calculation unit **22** can calculate the velocity vector v**11** with a small error. Accordingly, the velocity calculation unit **22** regard the velocity vector as the advance direction **14** if the magnitude of the velocity vector v**11** calculated is greater than or equal to a predetermined value. Here, the term "the velocity greater than or equal to the predetermined value" is intended to mean the velocity if the error in the absolute azimuth of the velocity vector is less than the error in the arrangement azimuth **15,** the velocity vector being calculated based on the frequency shifts due to the Doppler effects in this velocity, the arrangement azimuth **15** being measured by positioning the antennas **12** and **13.**

The advance direction calculation unit **24** receives the velocity vector v**11** of the vehicle 10 from the velocity calculation unit **22,** and regards the vehicle **10** as cruising forward at a velocity greater than or equal to the predetermined value if the magnitude of the velocity vector v **11** calculated by the velocity calculation unit **22** is greater than or equal to the predetermined value. Then the advance direction calculation unit **24** outputs the information about the direction of the velocity vector ν **11** as the advance direction **14** to the notification unit **25** if the magnitude of the velocity vector ν **11** is greater than or equal to the predetermined value.

The correction value calculation unit **23** receives the arrangement azimuth **15** from the antenna azimuth measurement unit **21** and the velocity vector ν **11** of the vehicle **10** from the velocity calculation unit **22,** and calculates and stores the angle θ as a correction value, the angle θ being formed between the direction of the velocity vector ν **11** and the arrangement azimuth **15** measured by the arrangement azimuth measurement unit **21,** the direction of the velocity vector ν **11** representing the advance direction **14** if the magnitude of the velocity vector ν**11** calculated by the velocity calculation unit **22** is greater than or equal to the predetermined value. If the correction value calculation unit **23** stores the correction value previously calculated, the correction value calculation unit **23** modifies the correction value previously calculated to be close to the correction value newly calculated and stores the modified correction value. Alternatively, the correction value calculation unit **23** may update the correction value previously calculated with the correction value newly calculated.

The velocity calculation unit **22** regards the vehicle **10** as cruising at a velocity less than the predetermined value or as not cruising if the magnitude of the vector ν **11** calculated is less than the predetermined value. In this case, the advance direction calculation unit **24** calculates the advance direction **14** by subtracting between the correction value calculated by the correction value calculation unit **23** and the arrangement azimuth **15,** and outputs the information about the calculated advance direction 14 to the notification unit 25.

For example, at the time **t1** when the magnitude of the velocity vector ν **11** calculated by the velocity calculation unit **22** is greater than or equal to the predetermined value, the antenna azimuth measurement unit **21** measures the arrangement azimuth **15,** then the correction value calculation unit **23** modifies the correction value indicated by the angle θ formed between the measured arrangement azimuth 15 and the advance direction **14,** and then the advance direction calculation unit **24** outputs the information about the direction of the velocity vector ν **11** as the advance direction **14** to the notification unit **25**. After the time **t1,** at the time **t2** when the magnitude of the velocity vector ν **11** is less than the predetermined value, the antenna azimuth measurement unit **21** measures the arrangement azimuth 15, then the advance direction calculation unit **24** calculates the advance direction **14** from the correction value modified at the time **t1** and the measured arrangement azimuth **15,** then the advance direction calculation unit **24** outputs the information about the calculated advance direction **14** to the notification unit **25.**

The notification unit **25** notifies the user of the advance direction **14** calculated by the advance direction calculation unit **24** via the display. The notification manner is not limited to the notification via the display, for example, the notification unit **25** may notify the use of the advance direction **14** by sound via the speaker. The use of the calculated advance direction **14** is not limited to notification to the user, the advance direction **14** may be used for a matching operation carried out by a vehicular navigation system to correct the position of the vehicle **10**.

While it has been described in the above embodiment that the advance direction measurement apparatus **11** is connected to the antennas **12** and **13,** this does not limit the present invention, the advance direction measurement apparatus **11** may include the antennas **12** and **13**.

As will be understood from the foregoing description, the advance direction measurement apparatus **11** according to the present embodiment can measure the precise advance direction **14** without restriction on installing the antennas **12** and **13** by calculating the correction value if the magnitude of the velocity vector ν **11** is greater than or equal to the predetermined value, and by calculating the advance direction 14 of the vehicle 10 from the calculated correction value and the arrangement azimuth **15.**

The advance direction measurement apparatus **11** can measure arrangement azimuth **15** with high accuracy resulting from the fact that the advance direction measurement apparatus **11** measures arrangement azimuth **15** under the condition that each of the antennas **12** and **13** receives signals from the same combination of satellites and reduces the margin of error in the relative positional relationship between the antennas **12** and **13**.

If the magnitude of the velocity vector ν **11** is greater than or equal to the predetermined value, the advance direction measurement apparatus **11** modifies the correction value previously calculated based on the correction value newly calculated, if the correction value calculation unit **23** has the correction value previously calculated. As a result, the advance direction measurement apparatus **11** can modify the correction value automatically while the vehicle **10** is cruising and the advance direction measurement apparatus 11 does not need to run the vehicle **10** at a velocity greater than or equal to the predetermined value in order to calculate the correction value while the vehicle **10** is cruising at a low speed or not cruising. Further, the advance direction measurement apparatus **11** can use the correction value newly calculated if the antenna **12** or **13** shifts from the installed position. Note that the advance direction measurement apparatus **11** may modify the correction value based on running conditions other than the velocity of the vehicle, for example, modifying the correction value previously calculated only while the vehicle is cruising straight, or modifying the correction value in response to the angle formed between the rear wheels and the wheels while the vehicle is turning right or left.

The advance direction measurement apparatus **11** can calculate the advance direction **14** with high accuracy while the vehicle is cruising at any speed, because the advance direction measurement apparatus **11** regards the direction of the velocity vector ν11 as the advance direction of the vehicle **10** if the magnitude of the velocity vector ν **11** is greater than or equal to the predetermined value and calculates the advance direction **14** from the correction value and the arrangement azimuth **15** if the magnitude of the velocity vector is less than the predetermined value.

While the present invention has thus been described in detail, however, the foregoing description has been made for purposes of illustration and not limitation. It should be understood that many changes and modifications may be made without departing from the scope of the present invention.

**INDUSTRIAL APPLICABILITY OF THE PRESENT INVENTION**

As will be seen from the foregoing description, the advance direction measurement apparatus according to the present invention, for measuring an advance direction of a movable body, has an effect of measuring a precise advance direction of a movable body without restriction on installing antennas, and is especially available as a navigation system installed on a vehicle or an airplane, and the like.

**Claims**

1. An advance direction measurement apparatus installed on a movable body and connected with two antennas receiving signals from satellites, comprising:

   an antenna azimuth measurement unit for measuring, on the basis of said signals received by each of said two antennas, an antenna arrangement azimuth indicative of a direction in which one of the positions of said two antennas is viewed from the other;
   a velocity calculation unit for calculating a velocity vector of said movable body on the basis of said signals received by each of said two antennas;
   a correction value calculation unit for calculating, as a correction value, an angle between said antenna arrangement azimuth and an direction of said velocity vector when a magnitude of said velocity vector calculated by said velocity calculation unit is greater than or equal to a predetermined value; and
   an advance direction calculation unit for calculating an advance direction of said movable body by using both said antenna arrangement azimuth and said correction value calculated by said correction value calculation unit.

2. The advance direction measurement apparatus as set forth in claim 1, in which
   if said magnitude of said velocity vector calculated by said velocity calculation unit is greater than or equal to said predetermined value, said advance direction calculation unit regards said direction of said velocity vector as said advance direction of said movable body,
   if said magnitude of said velocity vector calculated by said velocity calculation unit is less than said predetermined value, said advance direction calculation unit calculates said advance direction of said movable body from said antenna arrangement azimuth measured by said antenna azimuth measurement unit and said correction value calculated by said correction value calculation unit.

3. The advance direction measurement apparatus as set forth in claim 1, in which
   if said magnitude of said velocity vector calculated by said velocity calculation unit is greater than or equal to said predetermined value, said correction value calculation unit calculates said correction value again and to modify said correction value previously calculated on the basis of said correction value newly calculated, if said correction value calculation unit has said correction value previously calculated.

4. The advance direction measurement apparatus as set forth in claim 1, in which
   a combination of satellites transmitting signals received by one of said two antennas is the same as a combination of satellites transmitting signals received by the other of said two antennas.

FIG. 1

EP 1 837 675 A1

## FIG. 2

EP 1 837 675 A1

## FIG. 3

EP 1 837 675 A1

FIG. 4

EP 1 837 675 A1

**INTERNATIONAL SEARCH REPORT**

| International application No. |
|---|
| PCT/JP2005/022458 |

A. CLASSIFICATION OF SUBJECT MATTER
*G01S5/14*(2006.01)

According to International Patent Classification (IPC) or to both national classification and IPC

B. FIELDS SEARCHED

Minimum documentation searched (classification system followed by classification symbols)
G01S5/14, G01C21/00

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-045385 A (Furuno Electric Co., Ltd.), 12 February, 2004 (12.02.04), Claims 1, 4; Par. Nos. [0008] to [0014] (Family: none) | 1-4 |
| A | US 2002/0165669 A1 (Robert Pinto), 07 November, 2002 (07.11.02), Par. Nos. [0017], [0103] to [0105] (Family: none) | 1-4 |
| A | Sinpo Hong, "Car Tests for the Estimation of GPS/INS Alignment Error", ION GPS/GNSS 2003, 2003, pages 957 to 967 (page 958, right column; Fig. 1) | 1-4 |

☒  Further documents are listed in the continuation of Box C.          ☐  See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 09 February, 2006 (09.02.06) | 21 February, 2006 (21.02.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/022458 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | Stephen Scott-Young, "An Intelligent Navigation Aid for Land Mobile Applications using Augmented Reality Technologies", ION GPS/GNSS 2003, 2003, pages 2371 to 2380 ("CALIBRATION PROCEDURE" ran) | 1-4 |
| A | JP 2001-281321 A  (Yokogawa Denshikiki Co., Ltd.), 10 October, 2001 (10.10.01), Claims 1 to 6 (Family: none) | 1-4 |
| P,A | JP 2005-043212 A  (Furuno Electric Co., Ltd.), 17 February, 2005 (17.02.05), Claims 1, 3 (Family: none) | 1-4 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7131228 A